# EUROPÄISCHE PATENTANMELDUNG

(11) **EP 2 404 959 A1**
(43) Veröffentlichungstag der Anmeldung: **11.01.2012**
(21) Anmeldenummer: 10168828.1
(22) Anmeldetag: 08.07.2010
(51) Int. Cl.: C08J 9/28

(54) **Makroporen enthaltende Polymerschaumstoffe als Akustikdämmungs-Materialien**

(71) Anmelder: Cognis IP Management GmbH, 40589 Düsseldorf (DE)
(72) Erfinder: Birnbrich, Paul, 42719 Solingen (DE); Thomas, Hans-Josef, 41352 Korschenbroich (DE); Schenker, Gilbert, 40699 Erkrath (DE); Stahlhut-Behn, Dagmar, 40699 Erkrath (DE)

(57) **Zusammenfassung**

Makroporen enthaltende Polymerschaumstoffe wobei die Makroporen mittlere Querschnitte oberhalb von 500 nm aufweisen, sind erhältlich durch Umsetzung von ein oder mehreren Epoxidharzen mit einem oder mehreren amphiphilen Epoxidharzhärtern in Wasser im Sinne einer Phaseninversionspolymerisation, wobei man während der Phaseninversionspolymerisation, jedoch nach erfolgter Phaseninversion, eine Volumenvergrößerung der sich zunächst ausbildenden inneren Hohlräume, die überwiegend als Mikroporen mit mittleren Querschnitten unterhalb von 500 nm vorliegen, derart induziert, dass der Anteil der Makroporen - bezogen auf die Gesamtheit der im Polymerschaumstoff enthaltenen Mikroporen und Makroporen - am Ende der Phaseninversionspolymerisation oberhalb von 50 Vol.-% liegt. Derartige Polymerschaumstoffe eignen sich als Akustikdämmungs-Materialien bei Transportmitteln und im Industrie- und Anlagenbau.

## Beschreibung

### Gebiet der Erfindung

Die Erfindung betrifft spezielle Makroporen enthaltende Polymerschaumstoffe sowie deren Verwendung als Akustikdämmungs-Materialien.

### Stand der Technik

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beschichtungsmassen (Aufbringung einer Deckschicht auf ein Substrat, zum Beispiel für Fußbodenbeschichtungen).

Poröse Absorber sind seit langem als Schalldämmstoffe bekannt. Die Wirkung beruht dabei auf Absorption der Schallwellen in der offenzelligen Porenstruktur und Umwandlung der Schallenergie in Wärmeenergie. Konventionelle poröse Absorber sind in ihrer Wirkung mit zunehmender Frequenz effektiver und breitbandiger und werden daher eher zur Dämpfung mittlerer bis höherer Frequenzen verwendet. Die schalldämmende Wirkung wird durch den Schallabsorptionsgrad (ά₀), welcher durch Messung im Impedanzrohr (Kund'sches Rohr) nach ISO 10534 ermittelt wird, ausgedrückt. Dabei bedeutet ein Wert von 1,0, daß alle Schallwellen bei der entsprechenden Frequenz absorbiert werden, ein Wert von 0,5 entspricht folglich einer Reduzierung des Schallpegels der entsprechenden Frequenz um die Hälfte.

### Beschreibung der Erfindung

Unter Schalldämmung wird üblicherweise die Verhinderung der Schallausbreitung durch Bauteile (z.B. Wände, Decken) verstanden, also die Reduktion der Schallübertragung in benachbarte Räume. Unter Schallabsorption wird die Dämpfung der Raumakustik durch Absorption von Schallwellen verstanden. Die Begriffe Schalldämmung und Schallabsorption sind jedoch nicht als strikte Gegensätze zu verstehen, weil sie auf unterschiedliche thematische Schwerpunkte fokussieren. Im Rahmen der vorliegenden Erfindung wird der neutrale Ausdruck Akustikdämmung verwendet, der beide Aspekte, also Schalldämmung und Schallabsorption einschließt. Unter Akustikdämmungs-Materialien werden also solche Materialien verstanden, die in der Lage sind, schalldämmend zu wirken und/oder schallabsorbierend zu wirken.

Aufgabe der vorliegenden Erfindung war es, Werkstoffe bereitzustellen, die sich als Akustikdämmungs-Materialien eignen. Insbesondere sollten diese Materialien dabei schalldämpfend wirken. Die schalldämpfende Wirkung kann sich dabei insbesondere auf den gesamten Frequenzbereich erstrecken, der dem menschlichen Gehör zugänglich ist oder nur auf einen Teil dieses Frequenzbereichs. Zusätzlich sollten die erfindungsgemäß intendierten Akustikdämmungs-Materialien eine geringe Wärmeleitfähigkeit (vorzugsweise unterhalb von 0,09 W/m*K) und hohe mechanische Festigkeit (maximale Druckspannung vorzugsweise oberhalb von 1,0 Mpa) aufweisen.

Gegenstand der vorliegenden Erfindung ist zunächst ein Makroporen enthaltender Polymerschaumstoff, wobei die Makroporen mittlere Querschnitte oberhalb von 500 nm aufweisen, erhältlich durch Umsetzung von ein oder mehreren Epoxidharzen mit einem oder mehreren amphiphilen Epoxidharzhärtern in Wasser im Sinne einer Phaseninversionspolymerisation, wobei man während der Phaseninversionspolymerisation, jedoch nach erfolgter Phaseninversion, eine Volumenvergrößerung der sich zunächst ausbildenden inneren Hohlräume, die überwiegend als Mikroporen mit mittleren Querschnitten unterhalb von 500 nm - und vorzugsweise unterhalb von 100 nm - vorliegen, derart induziert, dass der Anteil der Makroporen - bezogen auf die Gesamtheit der im Polymerschaumstoff enthaltenen Mikroporen und Makroporen - am Ende der Phaseninversionspolymerisation oberhalb von 50 Vol.-% liegt.

Die erfindungsgemäßen Polymerschaumstoffe sind Polymere, die innere Hohlräume aufweisen. Dabei handelt es sich um schwammartige Strukturen, die Makroporen enthalten. Die Makroporen weisen mittlere Querschnitte auf, die oberhalb von 500 nm und insbesondere oberhalb von 750 nm liegen. Die Polymerschaumstoffe können neben den Makroporen auch Mikroporen aufweisen, wobei jedoch die Makroporen volumenmäßig dominieren. Die Mikroporen weisen mittlere Querschnitte im Bereich von 10 bis 500 nm und insbesondere von 10 bis 100 nm auf. Der Anteil der Makroporen - bezogen auf die Gesamtheit von Mikroporen und Makroporen - liegt erfindungsgemäß vorzugsweise oberhalb von 50 Volumenprozent und insbesondere oberhalb von 75 Volumenprozent.

Ein weiterer Erfindungsgegenstand ist die Verwendung eines Makroporen enthaltenden Polymerschaumstoffs, wobei die Makroporen mittlere Querschnitte oberhalb von 500 nm aufweisen, erhältlich durch Umsetzung von ein oder mehreren Epoxidharzen mit einem oder mehreren amphiphilen Epoxidharzhärtern in Wasser im Sinne einer Phaseninversionspolymerisation, wobei man während der Phaseninversionspolymerisation, jedoch nach erfolgter Phaseninversion, eine Volumenvergrößerung der sich zunächst ausbildenden inneren Hohlräume, die überwiegend als Mikroporen mit mittleren Querschnitten unterhalb von 500 nm - und vorzugsweise unterhalb von 100 nm - vorliegen, derart induziert, dass der Anteil der Makroporen - bezogen auf die Gesamtheit der im Polymerschaumstoff enthaltenen Mikroporen und Makroporen - am Ende der Phaseninversionspolymerisation oberhalb von 50 Vol.-% liegt, als Akustikdämmungs-Material bei Transportmitteln und im Industrie- und Anlagenbau.

Wie oben ausgeführt zielt die erfindungsgemäße Verwendung auf die Akustikdämmung bei Transportmitteln und im Industrie- und Anlagenbau. Beispiele für Transportmittel sind etwa Automobile, Schiffe, Flugzeuge, Schienenfahrzeuge und dergleichen. Beispiele für den Industrie- und Anlagenbau sind etwa Behälter, Kessel, Rohrleitungen, Heizungsanlagen, Solaranlagen und dergleichen.

Die erfindungsgemäß einzusetzenden Polymerschaumstoffe zeichnen sich über die Akustik-Dämmungs-Eigenschaften hinaus durch eine geringe Wärmeleitfähigkeit bei hoher mechanischer Festigkeit aus.

### Zur Phaseninversionspolymerisation (PIP)

Unter Phaseninversionspolymerisation (PIP) ist folgendes zu verstehen: Man stellt zunächst eine wäßrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich selbstverständlich um das Epoxidharz (E).

Während der nun folgenden Umsetzung von Harz und Härter (Aushärtung im Sinne einer Polyaddition) kommt es zu einer Phaseninversion (Phasenumkehr), d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen E-mulgatoreigenschaften des Härters verändern, da dessen Natur sich durch Polyaddition in Richtung zunehmender Hydrophobie wandelt. Die Phaseninversion ist im allgemeinen mit einem deutlichen Viskositätsanstieg der Emulsion verbunden und daher gut erkennbar.

Nach vollständiger Aushärtung liegt nun eine poröse Polymermatrix vor, die in den Kavitäten die Wasserphase enthält. Die Wasserphase lässt sich gewünschtenfalls durch Trocknung entfernen, wobei luftgefüllte Kavitäten entstehen.

Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.

Zum einen kann das Reaktionssystem in eine abgeschlossene Form gegeben werden. Es ist auch möglich, das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie. Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren Beginn mit der Bildung der W/O-Emulsion anzusetzen ist. Man kann auch sagen, dass die PIP zwei Zeitfenster hat, die sich durch den jeweils vorliegenden Typ der Emulsion unterscheiden. Im Zeitfenster ZF1 liegt eine O/W-Emulsion vor, im Zeitfenster ZF2 liegt eine W/O-Emulsion. Die Zäsur zwischen den beiden Zeitfenstern ist der Vorgang der Phaseninversion. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gewünschtenfalls können dem Reaktionssystem auch Verdicker zugesetzt werden.

Die Aushärtung des Reaktionssytems kann in einem breiten Temperaturbereich durchgeführt werden, vorzugsweise zwischen 1°C und 99°C und insbesondere zwischen 5 °C und 60 °C.

Im Gegensatz zu den üblichen Verfahren zur Herstellung von Polymerschäumen können den PIP-Reaktionssystemen auch Füllstoffe zugesetzt werden. Durch den Einsatz ausgewählter Füllstoffe lassen sich dabei sowohl die mechanischen Eigenschaften wie Druckfestigkeit, Biegefestigkeit, E-Modul, Dichte als auch die Wärmeleitfähigkeit der erfindungsgemäßen Polymerschaumstoffe weiter modifizieren.

### Das Induzieren der Volumenvergrößerung

Die oben näher beschriebene Phaseninversionspolymerisation (PIP) weist zwei Zeitfenster auf, nämlich ZF1 und ZF2. Im Zeitfenster ZF1 liegt eine O/W-Emulsion vor. Danach erfolgt eine Phaseninversion (Phasenumkehr). Im Zeitfenster ZF2 liegt dann eine W/O-Emulsion vor. Für das Verständnis der vorliegenden Erfindung ist es wichtig, dass die intendierte Volumenvergrößerung während des Zeitfensters ZF2 induziert wird. Mithin findet die intendierte Volumenvergrößerung während der Phaseninversionspolymerisation und dort innerhalb des Zeitfensters ZF2 statt.

Auf welche Art und Weise die Volumenvergrößerung induziert wird, ist im Rahmen der vorliegenden Erfindung an sich nicht kritisch.

In einer Ausführungsform wird die Volumenvergrößerung dadurch induziert, dass man während der Phaseninversionspolymerisation, jedoch nach erfolgter Phaseninversion, ein Aufschäumungsmittel aktiviert. Als Aufschäumungshilfsmittel kommen ganz allgemein alle Substanzen in Betracht, die in der Lage sind, im Zuge der Phaseninversionspolymerisation eine innere Volumenvergrößerung dadurch zu bewirken, dass sie im alkalischen Milieu (pH-Bereich von 7,5-14) ein Gas freisetzen. Beispiele für geeignete Aufschäumungsmittel sind: Wasserstoffperoxid und organische Hydroperoxide. Die Menge des Aufschäumungshilfsmittels liegt vorzugsweise im Bereich von 0,1 bis 10 Gew.-% und insbesondere 0,5% bis 5% Gew.-% - jeweils bezogen auf die Gesamtheit der in der Emulsion vorhandenen Feststoffe. Das Aufschäumungshilfsmittel kann bereit vor oder innerhalb des Zeitfensters ZF 1 zudosiert werden.

In einer Ausführungsform wird die Volumenvergrößerung dadurch induziert, dass man während der Phaseninversionspolymerisation, jedoch nach erfolgter Phaseninversion, ein im System enthaltenes flüssiges Medium über dessen Siedepunkt erhitzt.

Dieses flüssige Medium kann dem System etwa in Form eines organischen Lösemittels zudosiert werden, vorzugsweise eines solchen, das einen Siedepunkt unter 100°C aufweist.

In einer besonders bevorzugten Ausführungsform handelt es sich bei dem flüssigen Medium um das im System ohnehin vorhandene Wasser; dabei wird dann die Volumenvergrößerung dadurch bewirkt, dass man das System im Zeitfenster ZF2 auf Temperaturen oberhalb von 100 °C erwärmt. Durch Wahl der Wassermenge im System, der Temperatur im Zeitfenster ZF2 und des Zeitpunktes der Temperaturerhöhung kann der Polymerschaumstoff hinsichtlich seiner inneren Hohlraumstruktur modifiziert werden.

Die beiden oben näher umschrieben Arten der Induzierung der Volumenvergrößerung können einzeln oder simultan eingesetzt werden.

### Zu den Epoxidharzen (E)

Bei den Epoxidverbindungen (E) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungsund Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).

Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung der erfindungsgemäßen Polymerschaumstoffe, können optional zusätzliche dem Fachmann einschlägig bekannte Zusatzstoffe und/oder Verarbeitungshilfsmittel eingesetzt werden. Beispiele hierfür sind Pigmente, Entlüfter, Entschäumer, Dispergierhilfsmittel, Antiabsetzmittel, Beschleuniger, freie Amine, Verlaufsadditive, Leitfähigkeitsverbesserer.

### Zu den Epoxidharzhärtern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Vorzugsweise setzt man solche Härter (H*) ein, die erhältlich sind, indem man eine Mischung enthaltend
(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F
zu einem Zwischenprodukt (Z) umsetzt und dieses Zwischenprodukt anschließend mit einem Polyamin (P) umsetzt.

In einer Ausführungsform werden ausschließlich die Komponenten (A), (B) und (C) zu dem Zwischenprodukt (Z) umgesetzt und dieses weiter mit einem Polyamin (P) umgesetzt.

In einer weiteren Ausführungsform werden zur Herstellung des Zwischenproduktes (Z), das anschließend mit den Polyaminen (P) zum Härter umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

### Zu den Verbindungen (A)

Unter **epoxidierten Polyethylenoxiden** werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter **epoxidierten Polypropylenoxiden** werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter **Polyethylenpropylenoxiden** werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylenund Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

### Zu den Verbindungen (B)

Unter **Bisphenol-A-Epoxiden** werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Shell.

Die Molekulargewichte der eingesetzten Bisphenol-A-epoxide liegen vorzugsweise im Bereich von 380 bis 3000.

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert. Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

### Zu den Verbindungen (C)

**Bisphenol-A** ist dem Fachmann einschlägig bekannt und wird durch folgende Formel charakterisiert: 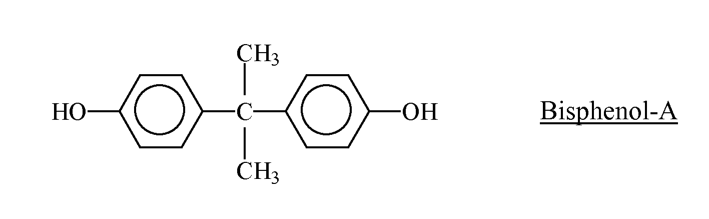 **Bisphenol-F** ist dem Fachmann ebenfalls einschlägig bekannt.

Die Verbindungen (C) können einzeln oder im Gemisch miteinander eingesetzt werden.

### Zu den Verbindungen (P)

Als **Polyamine (P)** kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1 , 4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.

Die Verbindungen (P) können einzeln oder im Gemisch miteinander eingesetzt werden.

### Zur Herstellung des Zwischenproduktes (Z)

Wie oben ausgeführt sind die Härter (H*) dadurch erhältlich, dass man eine Mischung enthaltend die Verbindungen (A), (B) und (C) zunächst zu einem Zwischenprodukt (Z) umsetzt, welches anschließend mit dem Polyamin (P) umgesetzt wird. In einer Ausführungsform setzt man bei der Herstellung des Zwischenproduktes die Verbindungen (A) und (B) in einem molaren Verhältnis von 0,1:1 bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters (H*) auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so dass die funktionelle Gruppe NH₂ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).
Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

### Zur Herstellung des Härters (H)

Zur Herstellung des Härters wird wie schon gesagt das Zwischenprodukt (Z) mit einem Polyamin (P) umgesetzt.

In einer Ausführungsform setzt man das Zwischenprodukt und das Polyamin (P) in solchen Mengen ein, daß das Äquivalentverhältnis der reaktiven H-Atome an den A-minostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

### Beispiele

### Abkürzungen

Im Folgenden bedeuten:
- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

### Verwendete Rohstoffe

| | |
|---|---|
| **Epoxidharz (E):** | Chem Res E20 (Cognis GmbH) |
| **Härter (H):** | es wurden folgende Härter hergestellt: |

### Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.

Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.

Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

### Anwendungsbeispiele

Die nachfolgenden Beispiele sind wie folgt zu verstehen: Beispiel 1 dient dem Vergleich, hier wurden keine Maßnahmen getroffen, um im Zeitfenster ZF2 eine Volumenvergrößerung zu induzieren. Beispiele 2 und 3 sind erfindungsgemäß. Dabei wurde im Beispiel 2 eine Volumenvergrößerung mittels Wasserstoffperoxid und im Beispiel 3 eine Volumenvergrößerung mittels Erhitzen des flüssigen Mediums Wasser über dessen Siedepunkt induziert - jeweils im Zeitfenster ZF2 der Phaseninversionspolymerisation.

### Beispiel 1

Epoxidharze (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzten Mengen an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Die Gesamtzeit vom Voremulgieren bis zur Verarbeitung betrug ca. 7 Minuten. Das Äquivalentverhältnis Epoxidharz zu Härter betrug 1 : 1. Die fertige Emulsion wurde zur Aushärtung in eine entsprechende Form gegossen und mit Aluminiumfolie abgedeckt gemäß den Angaben in der Tabelle ausgehärtet.

### Beispiel 2

Die Emulsionsherstellung erfolgte analog Beispiel 1. Zu der fertigen Emulsion wurde als Aufschäumungshilfsmittel Wasserstoffperoxid wie in der Tabelle 1 angegeben unter Rühren zugegeben und 2 Minuten homogenisiert. Die so vorbereitete Emulsion wurde zur Aushärtung in eine entsprechende Form gegossen und mit Alufolie abgedeckt gemäß den Angaben in der Tabelle ausgehärtet.

### Beispiel 3

Die Emulsionsherstellung erfolgte analog Beispiel 1. Die fertige Emulsion wurde zur Aushärtung in eine entsprechende Form gegossen. Die Form mit der Gußmasse wurde mit Alufolie abgedeckt und 30 Minuten bei 55°C im Trockenschrank vorgehärtet. Die Gußmasse war nach dieser Zeit bereits fest, die Phaseninversion bereits abgeschlossen, die Aushärtung war jedoch noch nicht vollständig, d.h das System befand sich im Zeitfenster ZF2 (siehe Beschreibung oben). Die Form wurde dann sofort in einen auf 120°C vorgeheizten Trockenschrank gestellt. Dadurch konnte das Wasser in den Poren verdampfen und durch den entstehenden Gasdruck erfolgte eine Volumenzunahme der gebildeten Poren und gleichzeitig die weitere Aushärtung des Polymers. Nach 30 Minuten Verweilzeit bei 120 °C wurde die Form entnommen und anschließend 18 Stunden bei 23°C stehen gelassen (Nachtrocknung). Der Prüfkörper wurde aus der Form genommen und bei 55°C bis zur Massenkonstanz getrocknet.

Einzelheiten zu den Beispielen 1 bis 3 können der Tabelle 1 entnommen werden, die auch die Messdaten bezüglich Wärmeleitfähigkeit, Biege- und Druckfestigkeiten der erhaltenen Polymerschaumstoffe enthält.

### Probenvorbereitung

Zur Herstellung der Prüfkörper für Biege- und Druckfestigkeitsmessungen wurden entsprechende Silikonformen, beschichtet mit dem Trennmittel T3 (Firma Ebalta), verwendet. Die Platten für die Wärmeleitfähigkeitsmessung wurden in einer Teflonform, beschichtet mit dem Trennmittel Loxiol G40 (Fa. Cognis), hergestellt. Die Gussmassen wurden bis zur Entformung abgedeckt, jedoch nicht Luftdicht verschlossen.

### Wärmeleitfähigkeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt.

### Bestimmung von Biege- und Druckfestigkeiten

Die Messung der Biege- und Druckfestigkeiten wurde in Anlehnung an DIN 53452 bzw. 53454 durchgeführt. Eine Lagerung bei Normklima fand nicht statt. Die Geometrieänderung der Probenkörper konnte nicht genau vorhergesagt werden und wurde deshalb nicht berücksichtigt. Als Messinstrument wurde eine Universalprüfmaschine von Instron, Typ 5565 mit der Software Bluehill 2.0, eingesetzt. Die Maße der Prüfkörper für die Biegeversuche waren Rechtecke mit 120mm x 10mm x 15mm und für die Druckversuche wurden zylindrische Prüfkörper der Maße 27mm Höhe und 12mm Durchmesser eingesetzt. Die Prüfgeschwindigkeiten sind den DIN zu entnehmen.

**Tabelle 1 - Beispiele:**

| | **Beispiel 1** | **Beispiel 2** | **Beispiel 3** |
|---|---|---|---|
| **Härter H1 [g]** | 160,0 | 117,0 | 117,0 |
| **Epoxidharz Chem Res E20 [g]** | 145,1 | 100,0 | 100,0 |
| **vollentsalztes Wasser [g]** | 297,6 | 41,0 | 100,0 |
| **Wasserstoffperoxid, 35%-ig** | - | 2,0 | - |
| **Bindemittelgehalt [%]** | 40,0 | 63,0 | 53,7 |
| **Trocknungstemperatur** | 23°C | 23°C | 55°C/120°C |
| **Aushärtezeit** | 168 h | 168 h | je 30 min. |
| **Dichte [g/cm³]** | 0,47 | n.b. | 0,38 |
| **Wärmeleitfähigkeit [W/m*K]** | 0,05183 | n.b. | n.b. |
| **Max. Druckspannung Mittelwert [MPa]** | 9,0 | n.b. | n.b. |
| **Max. Druckspannung Standardabw. [MPa]** | 2,4 | n.b. | n.b. |
| **Biege-E-Modul Mittelwert [Mpa]** | 99,4 | n.b. | n.b. |
| **Biege-E-Modul Standardabw. [Mpa]** | 6,0 | n.b. | n.b. |

| | | | |
|---|---|---|---|
| Hinweise: • Die Zeile "Bindemittelgehalt" dient lediglich der Information. Unter Bindemittel ist hier einfach das Umsetzungsprodukt von Härter H1 und Epoxidharz (Chem Res E20) zu verstehen. Der Bindemittelgehalt ist dementsprechend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten: Das eingesetzte Epoxidharz Chemres E 20 ist zu 100% zu berücksichtigen (145,1g). Vom eingesetzten Härter H1 sind, da er einen Feststoffgehalt von 60% aufweist, lediglich 0,6 x 160,0g = 96,0g zu berücksichtigen. Daraus ergibt sich die Menge des Bindemittels im System zu 96,0g + 145,1g = 241,1g. Das Gesamtsystem enthält zusätzlich 297,6 g Wasser, umfaßt mithin eine Gesamtmenge von 160g+145,1g+297,6g = 602,7g. Der Bindemittelanteil im Gesamtsystem ergibt sich daraus wie folgt: % Bindemittel = 241,1 x 100/602,7 = 40,00%. • n.b. = nicht bestimmt • mit "Dichte" ist die Dichte des Endproduktes gemeint, also die Dichte des Polymerschaumstoffes | | | |

## Patentansprüche

1. Makroporen enthaltender Polymerschaumstoff, wobei die Makroporen mittlere Querschnitte oberhalb von 500 nm aufweisen, erhältlich durch Umsetzung von ein oder mehreren Epoxidharzen mit einem oder mehreren amphiphilen Epoxidharzhärtern in Wasser im Sinne einer Phaseninversionspolymerisation, wobei man während der Phaseninversionspolymerisation, jedoch nach erfolgter Phaseninversion, eine Volumenvergrößerung der sich zunächst ausbildenden inneren Hohlräume, die überwiegend als Mikroporen mit mittleren Querschnitten unterhalb von 500 nm vorliegen, derart induziert, dass der Anteil der Makroporen - bezogen auf die Gesamtheit der im Polymerschaumstoff enthaltenen Mikroporen und Makroporen - am Ende der Phaseninversionspolymerisation oberhalb von 50 Vol.-% liegt.

2. Makroporen enthaltender Polymerschaumstoff, wobei die Makroporen mittlere Querschnitte oberhalb von 500 nm aufweisen, erhältlich durch Umsetzung von ein oder mehreren Epoxidharzen mit einem oder mehreren amphiphilen Epoxidharzhärtern in Wasser im Sinne einer Phaseninversionspolymerisation, wobei man während der Phaseninversionspolymerisation, jedoch nach erfolgter Phaseninversion, eine Volumenvergrößerung der sich zunächst ausbildenden inneren Hohlräume, die überwiegend als Mikroporen mit mittleren Querschnitten unterhalb von 100 nm vorliegen, derart induziert, dass der Anteil der Makroporen - bezogen auf die Gesamtheit der im Polymerschaumstoff enthaltenen Mikroporen und Makroporen - am Ende der Phaseninversionspolymerisation oberhalb von 50 Vol.-% liegt.

3. Polymerschaumstoff nach Anspruch 1 oder 2, wobei man solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens einee aromatische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

4. Polymerschaumstoff nach Anspruch 3, wobei man die Volumenvergrößerung dadurch induziert, dass man während der Phaseninversionspolymerisation, jedoch nach erfolgter Phaseninversion, ein Aufschäumungsmittel aktiviert und/oder ein im System enthaltenes flüssiges Medium über dessen Siedepunkt erhitzt.

5. Polymerschaumstoff nach Anspruch 3, wobei man die Volumenvergrößerung dadurch induziert, dass man während der Phaseninversionspolymerisation, jedoch nach erfolgter Phaseninversion, ein im System enthaltenes flüssiges Medium über dessen Siedepunkt erhitzt.

6. Polymerschaumstoff nach Anspruch 5, wobei das flüssige Medium das im System vorhandene Wasser ist.

7. Polymerschaumstoff nach Anspruch 3, wobei man die Volumenvergrößerung dadurch induziert, dass man während der Phaseninversionspolymerisation, jedoch nach erfolgter Phaseninversion, ein Aufschäumungsmittel aktiviert.

8. Polymerschaumstoff nach Anspruch 7, wobei das Aufschäumungsmittel Wasserstoffperoxid oder ein organisches Peroxid ist.

9. Polymerschaumstoff nach einem der Ansprüche 3 bis 8, wobei man als Polyamin (P) Diethylentriamin einsetzt.

10. Polymerschaumstoff nach einem der Ansprüche 3 bis 9, wobei man als Verbindungen (A) epoxidierte Polypropylenoxide einsetzt.

11. Polymerschaumstoff nach einem der Ansprüche 3 bis 10, wobei man als Verbindungen (B) Bisphenol-A-Epoxide einsetzt.

12. Verwendung des Polymerschaumstoffs gemäß einem der Ansprüche 1 bis 11 als Akustikdämmungs-Material bei Transportmitteln und im Industrie- und Anlagenbau.
